(19) Europäisches Patentamt
European Patent Office
Office européen des brevets

(11) **EP 4 418 167 A1**

(12) **EUROPEAN PATENT APPLICATION**

(43) Date of publication:
**21.08.2024 Bulletin 2024/34**

(21) Application number: **24154082.2**

(22) Date of filing: **26.01.2024**

(51) International Patent Classification (IPC):
**G06N 3/09** *(2023.01)*   **G06N 3/045** *(2023.01)*

(52) Cooperative Patent Classification (CPC):
**G06N 3/045; G06N 3/09**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.02.2023 IT 202300002487**

(71) Applicant: **STMicroelectronics International N.V.**
**1228 Plan-les-Ouates, Geneva (CH)**

(72) Inventors:
• **NACCARI, Filippo**
  **I-95030 Tremestieri Etneo (Catania) (IT)**
• **BOSCO, Angelo**
  **I-95014 Giarre (Catania) (IT)**

(74) Representative: **Campogiani, Giovanna**
**Buzzi, Notaro & Antonielli d'Oulx S.p.A.**
**Corso Vittorio Emanuele II, 6**
**10123 Torino (IT)**

(54) **ARTIFICIAL NEURAL NETWORK PROCESSING METHODS AND SYSTEMS**

(57)    A processing device (14) comprising memory circuitry (18) having stored therein a set of weight values (W) and a threshold value (T) and instructions which, when executed in the processing device (14), cause the processing device (14) to: apply a first artificial neural network, ANN processing (20) to a set of sensing signals (SD), producing as a result a set of compressed representations of the sensing signals (EMB). The first ANN processing (20) is trained to produce the set of compressed representations (EMB) using a set of training signals distributed according to a set of training classes having an integer number L of classes. The instructions further cause the processing device (14) to: configure (BC) weight values of a plurality of computing units of a set of ANN processing circuits as a function of a set of weight values (W); apply a further artificial neural network, ANN processing (50) to the set of sensed signals (SD) via the set of ANN processing circuits configured as a function of the set of weight values (W), obtaining as a result a set of probability values indicative of a probability that a respective compressed representation in the set of compressed representations of sensing signals (EMB) corresponds to sensing signals in the set of sensing signals (SD) that fail to classify as belonging to the set of training classes having the integer number L of classes; obtaining an aggregated probability value (54) and providing (56) an indicator signal (D) based on a comparison (56) of the aggregated probability value and a threshold value (T).

FIG. 3

EP 4 418 167 A1

**Description**

Technical field

The description relates to artificial neural network, ANN processing methods and systems.
One or more embodiments may be applied to processing signals sensed via inertial sensors such as accelerometers, for instance for human activity recognition, and/or images and/or audio signals for classification thereof.

Background

An artificial neural network - ANN is a computer-based tool (e.g., a computer program product) adapted to process large quantities of data. ANN systems "learn" to perform tasks by considering examples, generally without being programmed with task-specific rules. The ANN is arranged in a plurality of "layers" each comprising a certain number of layered processing units currently referred to as "neurons" or "perceptrons". Different types of signal processing operations are made at each computing layer and each perceptron has at least two design parameters: a weight value, which is determined by training, and an activation function, which determines the kind of signal processing that it applies to input signals.
Neural networks (also known as "machine learning methods") can be operated in two different phases:

-   a "training phase" in which the various layers of the network receive "training data" as input, that is signals whose classification is known a priori; during the training phase, the weights of the computing units of the various layers are adaptively varied, e.g. via an error minimization function, until the output prediction and the a priori known label are reach a pre-defined error margin distance; and
-   an "inference phase" during which the layers of the ANN process signals whose classification is not known a priori, and they provide accurate output predictions on such data based on the weight values of the computing units "learnt" (that is, iteratively adjusted) during the training phase.

Training of ANNs is based on the so-called "closed world assumption": when operated with input data different from the training data (that is, at inference time), the ANN operates under the assumption that it will be supplied with data samples that belong to the classes learned during training.
As exemplified in Figure 1, the training set TS comprises a set of signals or data points D1, D2, D3 and during training the ANN is adjusted so as to assign a respective class C1, C2, C3 to respective data points in the set of data points D1, D2, D3.
However, in a real-life scenario, the ANN could receive input signals or data points belonging to unknown classes.
As exemplified in Figure 2, in the inference scenario WS the ANN receives signals or data points D1, Dx some of which may belong to classes Cx different from the classes C1, C2, C3 learnt during the training phase.
Failing to recognize when this occurs, may cause the ANN to yield unreliable and overconfident output results.
For instance, while in-distribution samples, that is samples D1, D2, D3 belonging to the classes C1, C2, C3 seen during model training, can still be labeled correctly, out-of-distribution samples, that is those samples Dx belonging to classes Cx unseen during model training, may be wrongly labeled as belonging to class C1.
Therefore, ANNs may be vulnerable to (OOD) data signals.
In the case of classification problems, OOD data corresponds to samples from novel classes or anomalies, not present in the training dataset provided during the training phase. Similarly, in regression tasks, OOD data may cause the ANN to operate in extrapolation regime, outside of the range it was trained on. In order to preserve reliability and safety, the model could properly trigger an inference exception, avoiding making a prediction when encountering OOD data or providing a proper fallback mechanism.
A neural network performing data processing on an OOD signal may produce overconfident predictions leading to potentially dangerous consequences depending on the context in which it operates.
For example, an ANN neural network designed for human activity recognition and trained on a closed set of classes such as "walking, running, driving": at inference time the network is hardly capable of accurately detecting that the input data might be sampled from other classes such as biking or swimming. As a result, in case of OOD data, the outcome is a wrong label selected from the label universe learned during training.
Such a problem is cross-domain, including inertial, audio and imaging application scenarios of the ANN and may limit the realm of applications of ANNs.
Existing approaches to the issue suffer one or more of the following drawbacks:

-   a baseline approach involves applying an output distribution of the classification model (e.g., softmax) to the data; however, this approach is too vague and hardly reliable;

- an input perturbation approach provides an improvement over the baseline, however it is hardly suitable for endpoint processing as it involves backpropagation;
- other approaches, such as contrastive learning, for instance, require original model retraining, which may lead to undesirable changes in the accuracy of the ANN.

Object and summary

An object of one or more embodiments is to contribute in overcoming the aforementioned drawbacks.

One or more embodiments facilitate providing classification systems that can recognize unseen samples belonging to unlearnt classes, facilitating countering overconfident or wrong estimation results.

According to one or more embodiments, that object can be achieved via a method having the features set forth in the claims that follow.

One or more embodiments may relate to a corresponding processing device.

One or more embodiments may relate to a corresponding system.

One or more embodiments may relate to the method as a computer-implemented method.

To that effect, one or more embodiments may comprise a computer program product loadable in the memory of at least one processing circuit (e.g., a computer) and comprising software code portions for executing the steps of the method when the product is run on at least one processing circuit. As used herein, reference to such a computer program product is understood as being equivalent to reference to computer-readable medium containing instructions for controlling the processing device/system in order to co-ordinate implementation of the method according to one or more embodiments. Reference to "at least one computer" is intended to highlight the possibility for one or more embodiments to be implemented in modular and/or distributed form.

One or more embodiments may be suitable for loading in the memory of at least one processing circuit (e.g., a micro-controller) and comprise software code portions for executing the steps of the method when the product is run on at least one processing circuit. As used herein, reference to such an artificial neural network is understood as being equivalent to reference to an electronic circuit and/or computer-readable medium containing instructions for controlling the processing system in order to co-ordinate implementation of the method according to one or more embodiments.

The claims are an integral part of the technical teaching provided herein with reference to the embodiments.

One or more embodiments facilitate allowing detecting out-of-distribution signal samples without affecting the original accuracy of the ANN.

One or more embodiments facilitate edge processing, as a result of dispensing from the use of burdensome processing (e.g., backpropagation).

One or more embodiments may exploit a pool of binary classifiers trained on groups of classes.

One or more embodiments facilitate providing an automatic number of training steps (e.g., number of groups selection, generation of the groups, training of the binary classifiers, choice of threshold, post-processing).

One or more embodiments facilitate reducing computational and memory footprint.

One or more embodiments facilitate providing additional information regarding the reliability of a classification label assigned by an ANN to a processed signal.

Brief description of the several views of the drawings

One or more embodiments will now be described, by way of non-limiting example only, with reference to the annexed Figures, wherein:

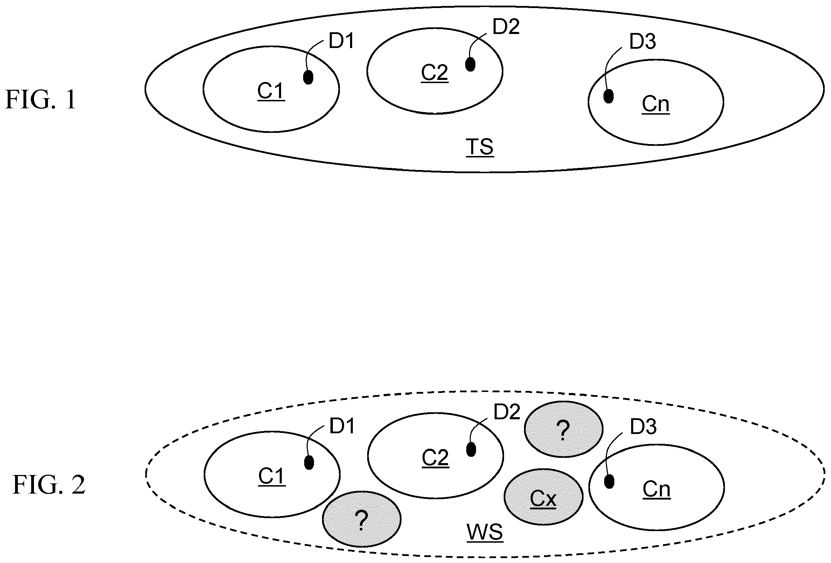

- Figures 1 and 2 have been discussed in the foregoing,
- Figure 3 is a diagram exemplary of a system as per the present disclosure,
- Figure 4 is a diagram exemplary of a method as per the present disclosure,
- Figure 5 is a diagram exemplary of operations in the method exemplified in Figure 4,
- Figure 6 is a diagram exemplary of a portion of the method exemplified in Figure 4,
- Figure 7 is a diagram exemplary of a portion of the method exemplified in Figure 6,
- Figures 7A and 7B are diagrams exemplary of principles underlying one or more embodiments,
- Figure 8 is a diagram exemplary of operations in a method as per the present disclosure,
- Figures 9 and 10 are diagrams exemplary of principles underlying one or more embodiments,
- Figures 11 and 12 are diagrams exemplary of a method as per the present disclosure.

Corresponding numerals and symbols in the different figures generally refer to corresponding parts unless otherwise indicated.

The figures are drawn to clearly illustrate the relevant aspects of the embodiments and are not necessarily drawn to scale.

The edges of features drawn in the figures do not necessarily indicate the termination of the extent of the feature.

Detailed description

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular conformations, structures, or characteristics may be combined in any adequate way in one or more embodiments.

The references used herein are provided merely for convenience and hence do not define the extent of protection or the scope of the embodiments.

Also, throughout this description, the wording "neural network (processing)" as used, for instance, in expressions like artificial neural network (ANN) processing or convolutional neural network (CNN) processing, is intended to designate machine-implemented processing of signals performed via hardware (HW) and/or software (SW) tools.

In the so-called "closed set" classification there is a given set of classes and the goal of the classification is to choose which label to assign to (digital) signals (or data samples thereof).

In the so-called "open set" classification, conversely, there is an awareness that the given set of classes is only a subset of a much larger space of unknown classes, to which the signals could belong.

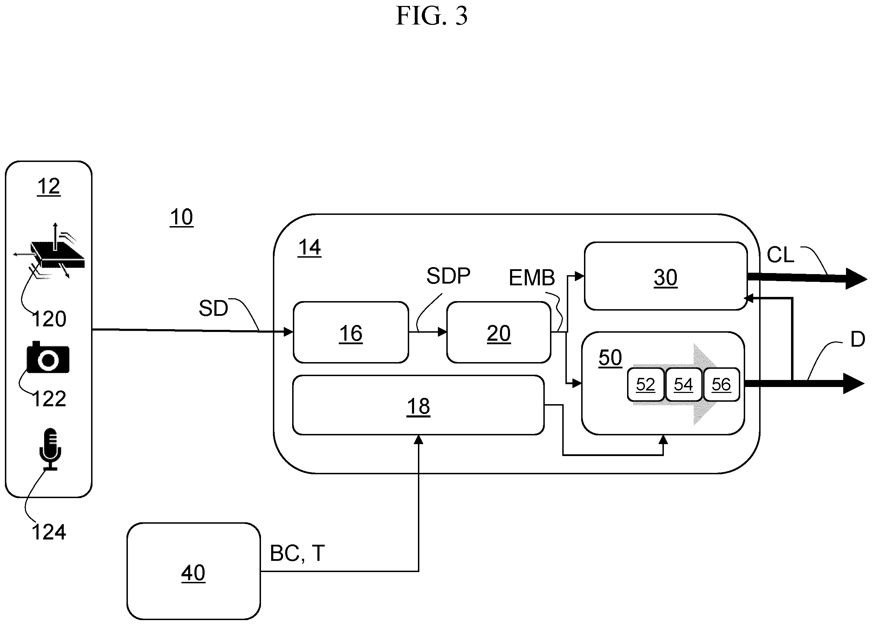

As exemplified in Figure 3, a classification system 10 suitable for performing open set classification comprises a processing device 14 configured to be coupled to a set of sensors 12 to receive a set of sensing signals SD therefrom, the processing device 14 equipped with a set of processing circuit blocks 16, 20, 30, 50 and at least one memory circuit block 18.

As exemplified in Figure 3, a processing device 14 comprises memory circuitry 18 having stored therein:

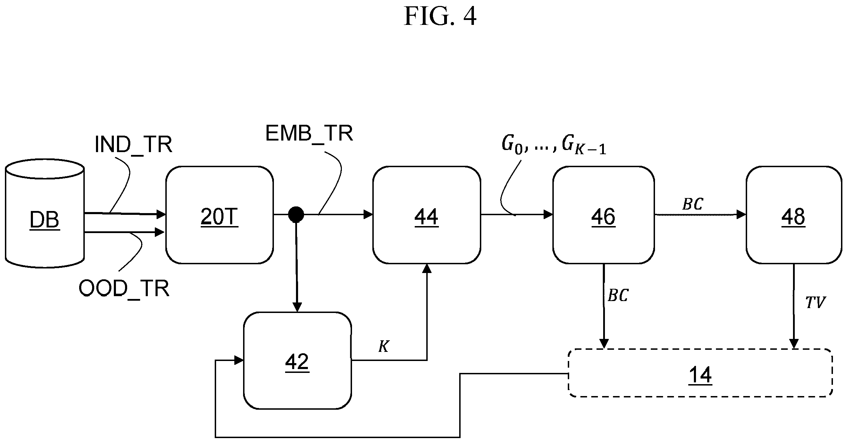

a set of weight values W and a threshold value T obtained using the method exemplified in any one of Figures 4 to 10; instructions which, when executed in the processing device, cause the processing device to:

apply a first artificial neural network, ANN processing 20 to a set of sensing signals SD, producing as a result a set of compressed representations of the sensing signals EMB, wherein the first ANN processing 20 is trained 20T to produce the set of compressed representations signals EMB using a set of training signals IND_TR distributed according to a set of training classes $C_0$, $C_1$, ..., $C_{L-1}$ having an integer number L of classes; access 18 the set of weight values W and the threshold value T stored in said memory of the processing device; configure BC weight values of a plurality of computing units of a set of ANN processing circuits as a function of the accessed set of weight values; apply a further artificial neural network, ANN processing to the set of sensed signals via said set of ANN processing circuits configured as a function of said accessed set of weight values, obtaining as a result a set of probability values indicative of a probability that a respective compressed representation in the set of compressed representations of sensing signals is the compressed representation of a corresponding sensing signal in the set of sensing signals that fails to classify as belonging to the set of training classes having the integer number L of classes, and aggregate 54 the set of probability values produced by the set of ANN processing circuits, obtaining an aggregated probability value as a result; perform a comparison 56; 483 of the aggregated probability value and the threshold value, providing an indicator signal D; D' as a function of the result of the comparison, and provide 56; 58 the indicator signal to user circuits 30.

As exemplified in Figure 3, a system 10 comprises:

a set of sensors 12 configured to sense a set of sensing signals SD, and a processing device 14 as exemplified in Figure 3 coupled to the set of sensors 12 to receive therefrom the set of sensing signals, a user circuit 30 coupled to the processing device to receive the indicator signal D therefrom, the user circuit configured to be activated or deactivated to process the sensing signals in the set of sensing signals based on the indicator signal exceeding or failing to exceed said threshold value T.

In a manner per se known, the set of sensors 12 is configured to detect the set of sensing signals SD to be classified, preferably digital signals comprising a plurality of digital samples.

For instance, the set of sensing signals SD received from the set of sensors 12 comprises:

acceleration signals provided by a triaxial accelerometer 120 configured to detect, e.g., data indicative of a physical activity of a wearer to which the accelerometer 120 may be coupled;
image signals provided by a camera 122 configured to detect images, e.g., the camera 122 mounted on-board an autonomous vehicle or robot; and
audio signals provided by a microphone 124 configured to detect audio signals, for instance the microphone 124 equipped with a speech recognition processing engine.

It is noted that the exemplary implementations of sensors in the set of sensors are purely exemplary, as one or more embodiments may further or alternatively comprise other kinds of sensors, such as gyroscopes, magnetometer, environmental sensors, LIDAR, radar and notionally any kind of known sensor device.

For instance, the set of sensors comprises at least one of an audio sensor 124 configured to sense audio sensing signals, a camera 122 configured to sense image signals, and a triaxial accelerometer 120 configured to provide acceleration signals.

As exemplified in Figure 3, processing device 14 is configured to apply ANN processing 20, 30, 50 to received signals in the set of signals SD, producing as a result a set of class labels L and/or an indicator signal D indicative of whether the input data belongs to the classes presented during training (briefly, is in-distribution - IND data) or not (briefly, out-of-distribution - OOD data) to user circuitry A.

It is noted that the user circuitry may be further circuitry internal or external to the processing device 14 itself. For instance, the indicator signal D may be used within the processing device 14 as an enable signal, subordinating the production of the set of class labels L to the value of the indicator being indicative of IND data. Such an arrangement may facilitate improving reliability of the set of class labels CL, for instance.

As exemplified in Figure 3, the system 10 comprises a training stage 40 coupled to the processing device 14, preferably via the memory circuit block 18, the training stage 40 configured to provide a set of weights W and a threshold level T to use in an ANN processing circuit block 50 of the set of ANN processing circuit blocks 20, 30, 50 as discussed in the following.

As exemplified in Figure 3, the processing device 14 further comprises:

optionally, a pre-processing circuit block 16 configured to apply signal pre-processing to set of sensing signals SD provided by the set of sensors 12, producing a pre-processed set of signals SDP as a result;
a (e.g., non-volatile) memory circuit block 18 configured to store a library encoding binary classification processing circuits BC (e.g., the weight values W of computing units of such circuitry) and a threshold value T produced via the training stage 40 and to deploy, at inference time, the binary classification circuits BC, the weight values W and the threshold value T to an ANN processing circuit block 50 in the set of ANN processing circuit blocks 30, 50, as discussed in the following.

As exemplified in Figure 3, the set of ANN processing circuit blocks 20, 30, 50 comprises:

a first ANN processing circuit block 20 configured to receive the (optionally pre-processed) sensing data SD, SDP and to apply a first ANN processing thereto, producing as a result set of embeddings EMB; as appreciable to the person skilled in the art, are a set of feature vectors which represent a sort of compressed representation of the input signals SD, SDP;
a second ANN processing circuit block 30, for instance a classifier circuit block coupled to the first ANN processing circuit block 20 to receive the set of embeddings EMB therefrom, the second ANN processing circuit block 30 configured to apply classification processing to the received set of embeddings EMB, providing as a result a set of class labels CL indicative of a class to which the input signal is deemed to belong by the ANN 30; for instance, the first 20 and the second 30 ANN processing circuit blocks may together form a further ANN processing stage, such as a stacked auto-encoder (known per se);
a third ANN processing circuit block 50 comprising a set of binary classifier circuit blocks BC loaded from memory 18, the second ANN processing circuit block 50 coupled to the first ANN processing circuit block 20 to receive the set of embeddings EMB therefrom and coupled to the memory circuit 18 to receive therefrom a set of weight values W for the set of binary classifier circuit blocks BC and a threshold value T stored therein, whose values have been stored in memory 18 as a result of the training phase 40 (as discussed in the following, e.g., with reference to Figure 3), the third ANN processing circuit 50 configured to apply the third ANN processing 50 to the input set of embeddings EMB using the set of binary classification circuits BC and respective parameters loaded from memory 18 to produce a set of binary output classifications (e.g., a set of probability values) which, after aggregation and comparison with the loaded threshold value T, produce as a result the indicator signal D indicative of whether the sensing data SD processed by the first ANN processing 30 belongs to any of the classes in the set of classes identified (for the first ANN processing) in the training phase or whether it is an OOD signal, as discussed in the following.

As discussed herein, the processing device 20 may comprise a so-called "edge device", that is a memory and computationally limited device, such as a microcontroller unit.

It is noted that the operations involved in the training stage 40 may be performed preferably on a processing device 14 more computationally powerful than the processing device 14, such as for instance a personal computer or a server, in a manner per se known.

As appreciable to the person skilled in the art, the topology and weight values W of a set of binary classification processing circuits BC may be exported from a personal computer to a memory in the form of a ready-to-use library, in a manner per se known.

The Inventors have observed that, in order to devise a method that is computationally feasible for edge devices, OOD detection may be simplified in setting decision boundaries to by exploiting embeddings, that are a sort of intermediate product of the ANN processing, rather than the input data.

The input data usually exists in a high dimensional ambient space (e.g., in the case of images). It is known, and exploited in known compression algorithms (such as single value decomposition - SVD or principal component analysis - PCA, for instance) that a reduced dimensionality may suffice to encode the intrinsic information stored in signals. During training, neural networks learn latent in which the input signal is eventually represented using much less dimensions (this is currently referred to by saying that signal is embedded in a low dimensional manifold).

As exemplified in Figure 3, at inference time, a way of detecting OOD signals using the second ANN processing 50 comprises:

block 52: deploying the set of binary classifiers having the weight values W stored in the memory 18 on the second ANN processing circuit block 50;
block 54: applying the second ANN processing 50 to the embeddings EMB and aggregating the signals output from the set of deployed binary classifiers, and
block 56: performing a comparison of the aggregated output signal with the predetermined threshold value T loaded from the memory circuit block 26, producing the trigger signal D indicative of whether the classified signals are IND or OOD signals as a result of the aggregated output exceeding or failing to exceed the loaded threshold value T.

For instance, each embedding EMB is processed by the pool of K binary classifiers BC whose outputs $P_0$, ..., $P_{K-1}$ are aggregated 482, $P_A$ and compared 483 against the learned threshold T to determine if the input sample is IND or OOD. This can be expressed as:

$$OOD(x) = \begin{cases} \text{true} & \text{if } \mathrm{Aggr}\big(P\big(E(x)\big)\big) \leq T \\ \text{false} & \text{otherwise} \end{cases}$$

where:

- E is the functional representation of the embedding process;
- P generates the multivariate output of the pool of binary classifiers, and
- Aggr() is a function, e.g., max() or sum().

As exemplified in Figure 4, a method as per the present disclosure performed in the training phase 40 comprises:

block DB: providing a raw set of training data signals IND_TR OOD_TR, e.g., hosted on a database DB stored on a server, in a manner per se known; for instance, the training data signals IND_TR, OOD_TR comprise a set of IND signals IND_TR which are used to train the first 20 and second 30 ANN processing circuit blocks of the processing device 14, and a set of OOD signals OOD_TR which can be any other kind of data signals;
block 20T: applying to the training data signals IND_TR, OOD_TR a first ANN processing 20T which is equal to the ANN processing 20 present on the processing device 20, producing as a result a set of training data embeddings EMB_TR (which are a sort of a compressed version of the training data signals IND TR, OOD_TR);
block 42: determining a number of groups K for clustering training data embeddings EMB_TR; optionally, the number of groups K may be determined also based on a set of parameters CP indicative of the processing capabilities of the processing device 14, such as available random-access memory - RAM size, non-volatile memory - NVM size, etc.;

block 44: clustering training data embeddings EMB_TR in the K groups determined in block 42, producing a set of clustered embeddings Go, ..., $G_{K-1}$; for instance, each j-th group among the K groups is populated with a balanced amount of IND embeddings and OOD embeddings, as discussed in the following; as appreciable to those of skill in the art, cluster analysis or clustering comprises grouping a set of objects in such a way that objects in the same group (called a cluster) are more similar (in terms of some distance metric, for instance) to each other than to those in other groups (or clusters);

block 46: training a set of binary classification processing circuits BC using the set of clustered embeddings Go, ..., $G_{K-1}$ as a training set for each binary classification processing circuit in the set of binary classifier circuits BC, obtaining at the end of the training process a ready-to-use library of binary classification processing circuits BC, e.g., which can be deployed in the third ANN processing stage 50 on the processing device 14; moreover, applying binary classification processing to the training data embeddings EMB_TR produces a set of classification signals as a result;

block 48: aggregating the probability values produced by the binary classification processing circuits BC and determining, based on the aggregated probability value, a threshold value T for discriminating between IND and OOD signals.

For instance, if all the binary classification processing circuits BC produce a high probability value that an input signal is an OOD signal, then it is flagged as OOD; conversely, if the probability value that input signal is indicated to be high for the signal to belong to IND signals by at least one binary classification processing circuit in the set of processing circuits, it is flagged as IND signal.

As exemplified in Figure 4, at the end of the training process the library binary classification processing circuits can be exported and saved in memory 18 of the processing device 14, e.g., as a ready-to-use library that comprises the set of weight values W of the computing units/perceptrons of the binary classification circuits BC; also, the computed threshold value T is provided for memorization to the non-volatile memory 18 of the processing device 14.

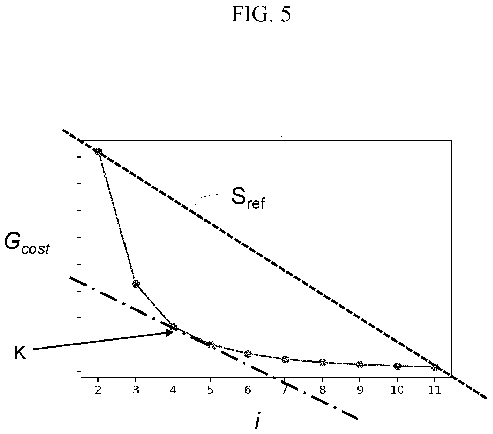

As exemplified in Figure 5, determining the number of groups in block 42 comprises analyzing the training data embeddings EMB_TR of the samples from the available dataset.

Inventors have noted that clustering IND training embeddings in a set of K groups leads to using a set of K binary classification processing circuitry, e.g., in place of a single classification circuit. Without constrains to any theoretical model, distributing the task of determining whether an embedding is generated from an IND or OOD signal among a set of binary classification processing circuits may advantageously simplify the computational complexity thereof.

The number K of groups in which performing clustering of the training embeddings EMB_TR, and consequently the number of binary classification processing circuits BC, is determined by computing a grouping cost coefficient $G_{cost}$ which is indicative of the shape of the clusters and assumes a "penalizing factor" against the creation of a large number K of groups (e.g., K>10). Such a grouping cost coefficient $G_{cost}$ can be expressed as the ratio between a monotonically decreasing cluster metric based on the number of groups, denoted as inertia, and the penalizing factor PF, e.g.:

$$G_{cost}(i) = \frac{\text{Monotonically decreasing clustering score}}{PF} = \frac{\text{Inertia}(i)}{i^n}$$

where

- i spans the interval [2, L+1], where L is the total number of classes from which IND training signals are drawn;
- PF is a penalizing factor, which may be for instance a n-th power of i (e.g., $PF = i^n$ with power factor $n \geq 0$) and/or consider device parameters of the processing device 14,
- Inertia(i) can be expressed as a sum of squared distances of n samples to their closest cluster center; e.g., given the set $C = (C_1, ..., C_i)$ of cluster centers, Inertia(i) is computed as:

$$\text{Inertia}(i) = \sum_{k=0}^{n} \min_{\mu_j \in C} \left( \left\| x_k - \mu_j \right\|^2 \right)$$

As exemplified in Figure 5, a plot of the values of the grouping cost coefficient $G_{cost}$ (represented on the ordinate axis) versus candidate values for the number of groups i (represented on the abscissa axis) yields a curve from which a "desirable" number of groups K may be selected according to various optimization methods.

As exemplified in Figure 5, an elbow method (per se known) is applied identifying a working point for i=4 to obtain an educated guess about the number of groups K to be used.

As exemplified in Figure 5, K is selected when the discrete derivative between two consecutive points of the cost function $G_{cost}$ has a reduced difference from a reference slope $S_{ref}$.

The method is based on the definition of a vector $\vec{S}$ which contains the pairwise discrete derivatives between consecutive points of the cost function $G_{cost}$, whose i-th element S(i) may be expressed as:.

$$S(i)=G_{cost}(i+1)-G_{cost}(i) \, , \quad i=K_{min},\ldots,L$$

The reference slope $S_{ref}$ can be calculated between the first $K_{min}$ and last $K_{max}$ points of the cost function $G_{cost}$ and can be expressed as:

$$S_{ref}=\frac{G_{cost}(K_{max})-G_{cost}(K_{min})}{(K_{max}-K_{min})}, \quad K_{min}=2, K_{max}=L+1$$

The (element-by-element) difference between the vector S and the reference slope $S_{ref}$ may be expressed as:

$$\vec{S}_{Diff}=\left|\vec{S}-S_{ref}\right|$$

Therefore, the number of groups computed via the elbow method may be expressed as:

$$K=\underset{j}{argmin}\left(\vec{S}_{Diff}\right), \quad j=K_{min},\ldots,L$$

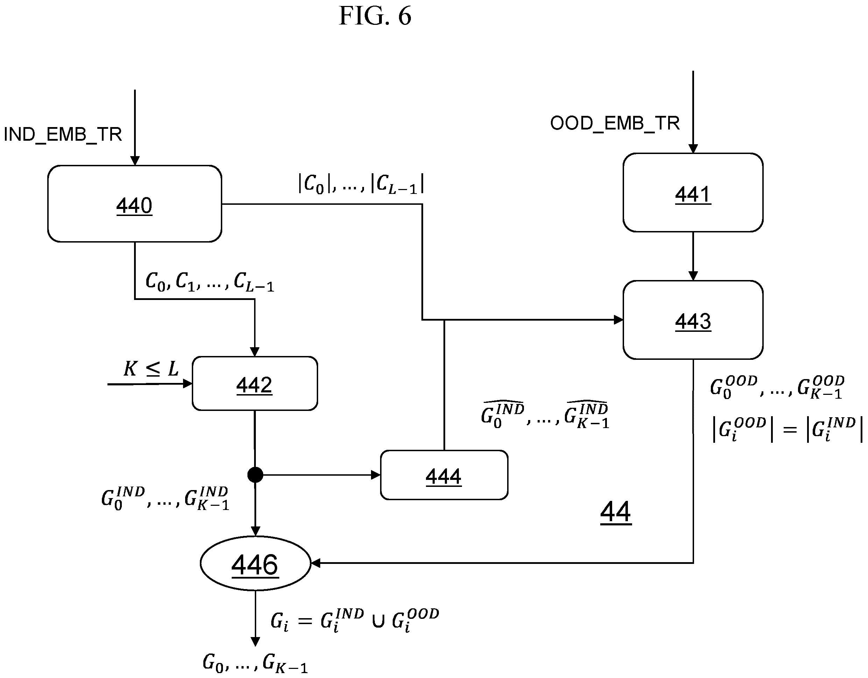

It is noted that the elbow method discussed above is only exemplary and in no way limiting for determining the number of groups K to employ. For instance, other choices for K (greater or lower values) can be considered compatibly with the computational and memory constraints of the device 14 in which the associated pool of binary classifiers are deployed. As exemplified in Figure 6, the operation of clustering the set of training embeddings EMB_TR (block 44 of Figure 4) comprises:

block 440: receiving IND training embeddings IND_EMB_TR generated from IND training signals IND_TR and applying class partitioning thereto, comprising grouping the IND training embeddings IND_EMB_TR in the same classes in which the IND training signals IND_TR are initially classified (e.g., L classes), providing a set of classified IND training embeddings $C_0$, $C_1$, ..., $C_{L-1}$;

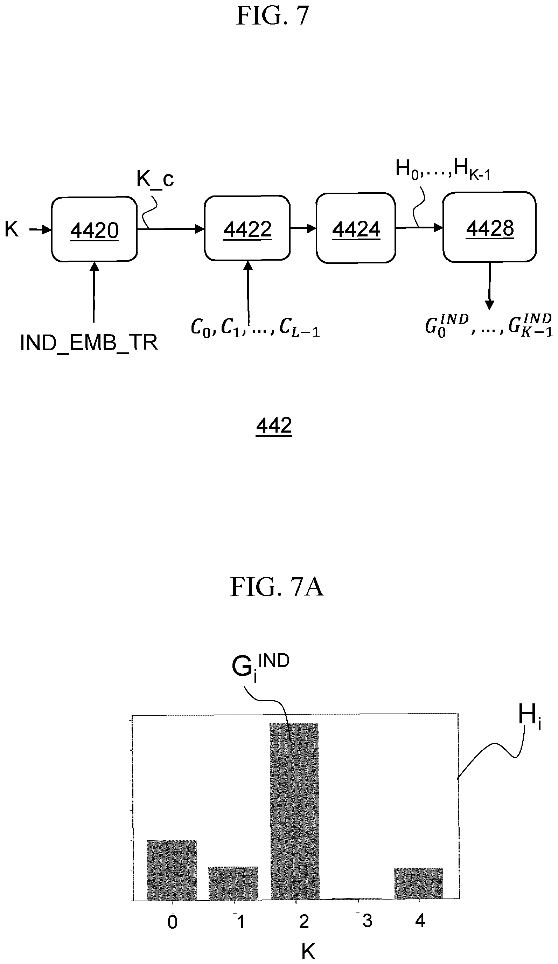

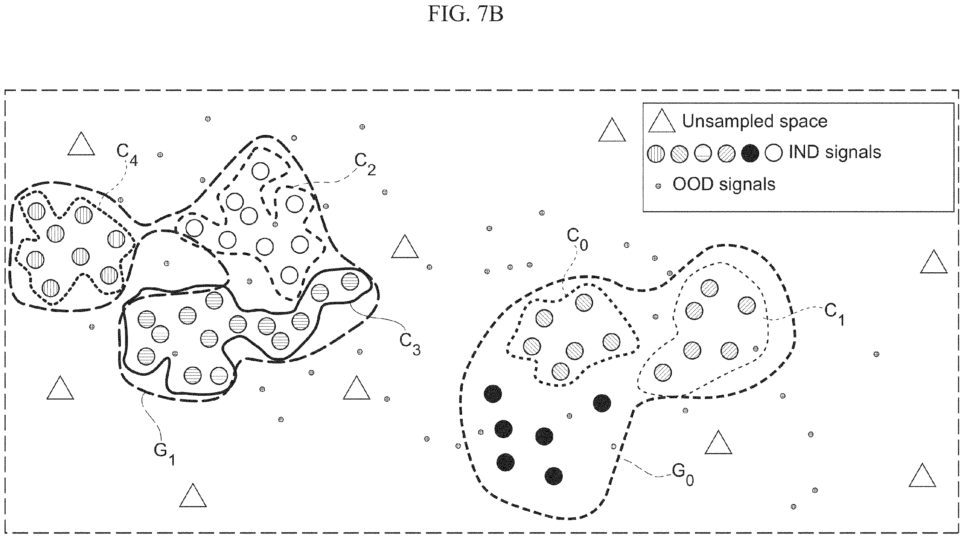

block 442: receiving the number K of cluster groups determined in block 42 of the training method 40, the IND training embeddings IND_EMB_TR and the set of classified IND training embeddings $C_0$, $C_1$, ..., $C_{L-1}$ and applying clustering processing thereto, as discussed in the following with reference to Figure 7, producing a set of K sets of IND training embeddings $G_0^{IND}$, ..., $G_{K-1}^{IND}$;

block 441: receiving OOD training embeddings OOD_EMB_TR generated from OOD training signals OOD_TR and applying shuffling thereto, obtaining a set of shuffled OOD training embeddings as a result comprising randomly redistributed OOD training embeddings;

block 443: applying (preferably, uniform) subsampling to the set of shuffled OOD training embeddings OOD_EMB_TR provided, obtaining an enhanced set of shuffled OOD training embeddings $G_0^{OOD}$, ..., $G_{K-1}^{OOD}$; block 443 uses the L classes $C_0$, $C_1$, ..., $C_{L-1}$ produced for the IND training embeddings to determine the cardinality of the enhanced set of shuffled OOD training embeddings $G_0^{OOD}$, ..., $G_{K-1}^{OOD}$ (e.g., $|G_i^{OOD}|=G_i^{IND}$);

block 446: merging the set of K sets of IND training embeddings $G_0^{IND}$, ..., $G_{K-1}^{IND}$ and the enhanced set of shuffled OOD training embeddings $G_0^{OOD}$, ..., $G_{K-1}^{OOD}$ in a single set of groups of training embeddings Go, ..., $G_{K-1}$ suitable to train a set of corresponding K binary classification processing circuits BC to perform pattern recognition of embedding signals, as discussed in the following.

Inventors have noted that also a set of "synthetic" OOD signals may be generated, by considering, for each class, all IND signals not belonging to that class as OOD signals for that class. This "complementary" way of generating "synthetic" OOD signals can be useful in case of scarcity of OOD signals.

To consider this "scarcity" scenario, optionally, the method further comprises (block 444) selecting complementary clustered IND training embedding $G_0^{IND}$, ..., $GK-1^{IND}$ for populating the set of OOD training embeddings and facilitate providing the enhanced set of shuffled OOD training embeddings $G_0^{OOD}$, ..., $G_{K-1}^{OOD}$ having the same cardinality (e.g., size) of the set of K sets of IND training embeddings $G_0^{IND}$, ..., $G_{K-1}^{IND}$.

As exemplified in Figure 7, applying clustering processing (block 442) to the set of classified IND training embeddings $C_0$, $C_1$, ..., $C_{L-1}$ comprises:

block 4420: applying clustering processing (e.g., K-means clustering processing, known per se) to the set of classified IND training embeddings $C_0$, $C_1$, ..., $C_{L-1}$, generating a set of K representative group centroids (e.g., in unsupervised mode) K_c as a result;

block 4422: mapping IND training embeddings IND_EMB_TR to one of the K groups having the respective set of K centroids K_c, e.g., by assigning the embeddings of each class $C_0$, $C_1$, ..., $C_{L-1}$ to the closest centroid of the respective set of K centroids K_c;

blocks 4424, 4428: specifically, IND training embeddings in the set of IND training embeddings IND_EMB_TR are assigned to a j-th group in the set of K groups having respective centroids K_c based on the j-th group collecting the highest number of embeddings of the j-th class; given that the number of groups K is lower than the number of labels L (e.g., K<=L), IND training embeddings from different classes are assigned to a same j-th group, desirably reducing the complexity.

For instance:

block 4424: a set of L histograms Ho, ..., $H_{L-1}$ are generated, where each histogram tells which j-th centroid is associated to the i-th class, i=0,..,L-1, as exemplified in Figure 7A;

block 4428: the j-th group among the K groups in which the i-th histogram $H_i$ among the L histograms Ho, ..., $H_{L-1}$ present a maximum value (e.g., K=2 for the histogram exemplified in Figure 7A) corresponds to the group to which the IND training embeddings are assigned, producing the respective j-th group $G_j^{IND}$ of IND training embeddings for the binary classifiers.

As exemplified in Figure 7B, the clustered embedding signals provide simplified decision boundaries to be learnt for the set of binary classifiers 50.

As exemplified in Figure 7B and discussed in the following, spreading the IND embeddings into different groups than those in which they are originally labeled and associating a binary classifier to each group is a computationally easier task than training a single large model that has to learn very complex boundaries among the full set of in-distribution embeddings and OOD signals.

Each binary classifier decides if the current input embedding is in-distribution with respect to the classes inside the group it is associated with.

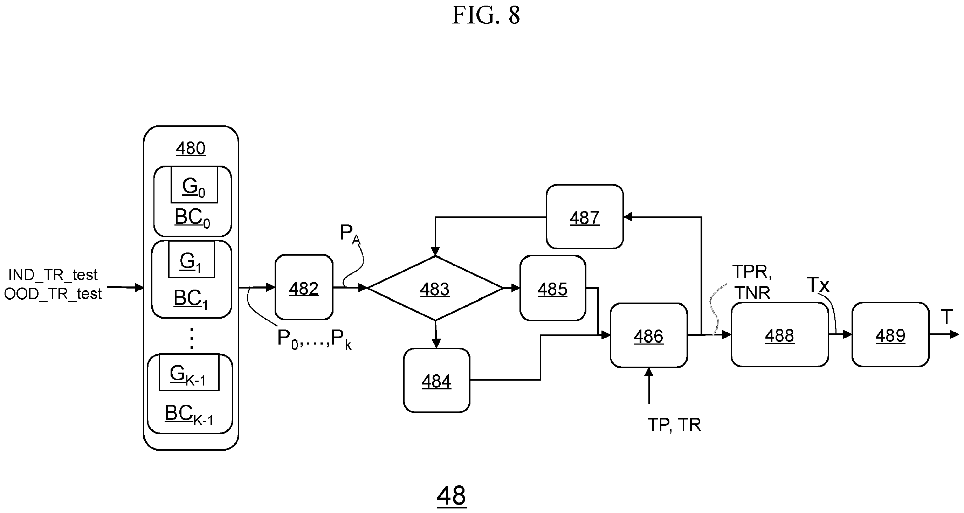

As exemplified in Figure 8, the set of clustered embeddings Go, ..., $G_{K-1}$ is provided a training (block 46 of Figure 4) and used to train binary K binary classifiers $BC_0$, $BC_1$, ..., $BC_{K-1}$ in a set of binary classification processing circuits BC, so that they are capable of producing predictions with respect to hold-out training data suitable for testing at inference time the set of binary classification processing circuits BC (as exemplified in block 46 of Figure 4).

For instance, each binary classification processing circuit BC comprises a set of computing units (or perceptrons) having a set of weight values the values of which are determined based on training using the set of clustered embeddings Go, ..., $G_{K-1}$ and with respective (e.g., sigmoid) activation functions.

As exemplified in Figure 8, the operation of aggregating the results of the binary classification processing circuits BC to provide a threshold value (block 48 of Figure 8) comprises:

block 480: providing IND and OOD hold-out training data to the set of trained binary classification processing circuits BC, producing as a result a set of probability (or score) values $P_0$, $P_1$, ..., $P_{K-1}$ that input signals belong to IND or OOD signals;

block 482: aggregating the set of probability values $P_0$, $P_1$, ..., $P_{K-1}$, for instance by selecting the maximum probability values and/or the sum of probability values in the set of probability values $P_0$, $P_1$, ..., $P_{K-1}$ or any other function that is invariant to the order of the input vector dimensions, providing an aggregated probability value $P_A$;

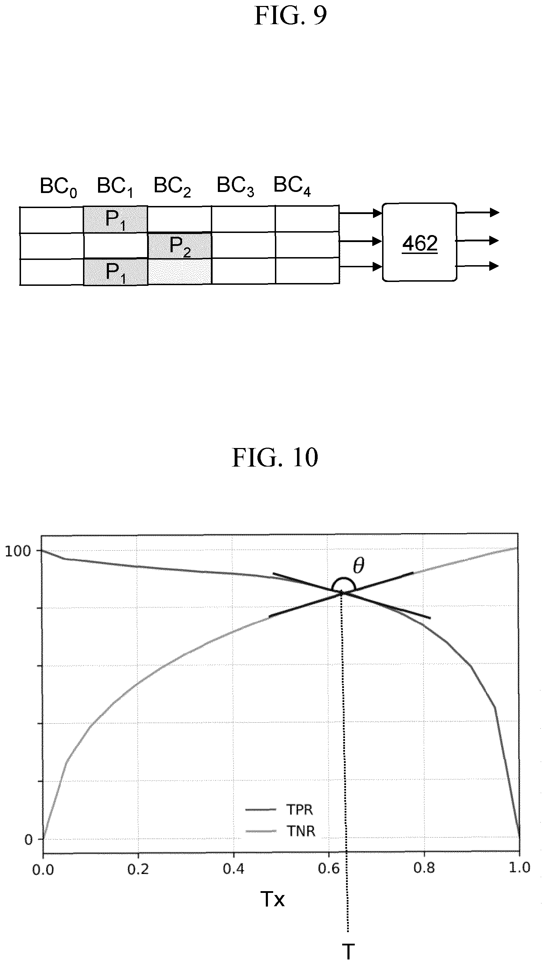

block 483: providing a candidate value (e.g., zero) of a possible threshold value x, and comparing the aggregated probability value $P_A$ with the candidate threshold value x, as exemplified in Figure 9;

block 484, 485: counting how many of the IND and OOD test signals above or below threshold x respectively;

block 486: providing the ground truth values of true positive TP and true negative TN in the test signals IND_TR_test, OOD_TR_test and, based on the counters 484, 485 computing a true positive rate TPR and a negative TNR obtained for the candidate threshold value analyzed;

block 487: iteratively increasing the candidate threshold value x in order to sweep a candidate range of values (e.g., a range between 0 and 1 at increments of 0.1);

block 488: collecting all the iteratively computed true positive rate TPR and true negative rate TNR for each of the iteration cycles of operations 483, 484, 485, 486, 487, obtaining a plot of curves of TPR, TNR values versus the respective candidate threshold values Tx on the abscissa axis, as exemplified in Figure 10; and

block 489: determining the threshold value among candidate threshold values as the one at the intersection of the curves of TPR and TNR rates, as exemplified in Figure 10.

Inventors have noted that selecting the threshold value as the one that identifies an angle Θ about 90° at the intersection of the two curves improve the robustness of the methodology.

For instance, the angle may be expressed as:

$$\theta = \pi - \left[ \tan^{-1}\left( \left| \frac{dTPR(Th)}{dTh} \right| \right) + \tan^{-1}\left( \left| \frac{dTNR(Th)}{dTh} \right| \right) \right] \Bigg|_{Th=T}$$

where

$$T = \{Th | TPR = TNR\}$$

As exemplified in any one of Figures 4 to 10, a computer-implemented method 40 comprises:

receiving DB a set of sensed training signals IND_TR OOD_TR comprising sensed in-distribution, IND training signals IND_TR distributed according to a set of training classes $C_0, C_1, ..., C_{L-1}$ having an integer number L of classes and sensed out-of-distribution, OOD training signals OOD_TR different from sensed IND training signals; processing the set of sensed training signals IND TR, OOD_TR via an artificial neural network, ANN processing stage 20T, producing a set of compressed representations EMB_TR of sensed training signals as a result, the set of compressed representations comprising compressed representations of sensed IND training signals IND_EMB_TR and compressed representations of sensed OOD training signals OOD_EMB_TR.

For instance, the ANN processing stage is configured to classify sensed IND training signals distributed according to the set of training classes having the integer number L of classes.

As exemplified in any one of Figures 4 to 10, the computer implemented method further comprises:

clustering 42, 44 the set of compressed representations of sensed training signals according to an integer number K of clusters, obtaining a set of K clusters of compressed representations $G_0, ..., G_{K-1}$ as a result, wherein the integer number K of clusters is greater than one and less (or equal, at least notionally) than said integer number of classes L; training 46 a set of K binary classification ANN processing circuits BCo, ..., $BC_{K-1}$ to output a set of estimated probabilities $P_0, ..., P_{K-1}$ that respective compressed representations in the set of K clusters of compressed representations classify as compressed representations of sensed OOD training signals EMB_TR, wherein training said set of K binary classification ANN processing circuits BCo, ..., $BC_{K-1}$ comprises iteratively adjusting a set of weight values W of a plurality of computing units of the set of K binary classification ANN processing circuits and obtaining a trained set of K binary classification ANN processing circuits 480 with the set of weight values determined as a result; providing test signals IND_TR_test, OOD_TR_test to the trained set of K binary classification ANN processing circuits and determining 48; 483, 484, 485, 486, 487, 488, 489 a threshold value T for classifying OOD signals based on at least one estimated probability value output by the set of estimated probability values; providing said determined set of weight values of the set of K binary classification ANN processing circuits and the determined threshold value to user circuits 18.

As exemplified in any one of Figures 4 to 10, clustering 44 the sensed training signals in the set of sensed training signals comprises:

applying clustering 442, 444 to compressed representations of sensed IND training signals IND EMB TR, obtaining a clustered subset of compressed representations of sensed IND training signals $G_0^{IND}, ..., G^{IND}_{K-1}$ distributed according to the integer number K of cluster groups, subsampling 441 the compressed representations of sensed OOD training signals EMB_OOD_TR, and shuffling

443 the subsampled compressed representations of sensed OOD training signals, thereby producing a subset of compressed representations of sensed OOD training signals $G_0^{OOD},...,G_{K-1}^{OOD}$, obtaining K subsets of sensed OOD training signals distributed according to the integer number K of cluster groups,
joining 446 the clustered subset of compressed representations of sensed IND training signals and the K subsets of compressed representations of sensed OOD training signals, producing the set of clustered training signals as a result.

As exemplified in any one of Figures 4 to 10, the computer-implemented method comprises:

aggregating 48; 482 the set of probability values $P_0$, ..., $P_{K-1}$ produced via processing the test signals via the trained set of K binary classification ANN processing circuits, obtaining an aggregated probability value $P_A$ as a result, and iteratively determining 48; 483, 484, 485, 486, 487, 488, 489 the threshold value for classifying OOD signals based on the aggregated probability value exceeding or failing to exceed the threshold value.

For instance, aggregating 48; 482 the set of probability values $P_0,...,P_{K-1}$ comprises selecting the maximum probability value $P_A$ among probability values in the set of probability values.
As exemplified in Figure 5, the computer implemented method comprises determining the integer number K of clusters by applying an elbow selection method to a grouping cost coefficient $G_{cost}$ function of K, wherein the grouping cost coefficient $G_{cost}$ comprises a ratio between a monotonically decreasing clustering metric and an integer N-th power of the integer number K.
As exemplified in Figures 7, 7A and 7B, the computer implemented method comprises:

computing 4420 a set of K centroids K_c of compressed representations of sensed IND training signals IND_EMB_TR classified in the set of L classes $C_0$, $C_1$, ..., $C_{L-1}$, preferably by applying K-means processing;
associating 4422, 4424, 4428 compressed representations of sensed IND training signals to respective K groups having respective K centroids of the computed set of K centroids based on a distance or density metric.

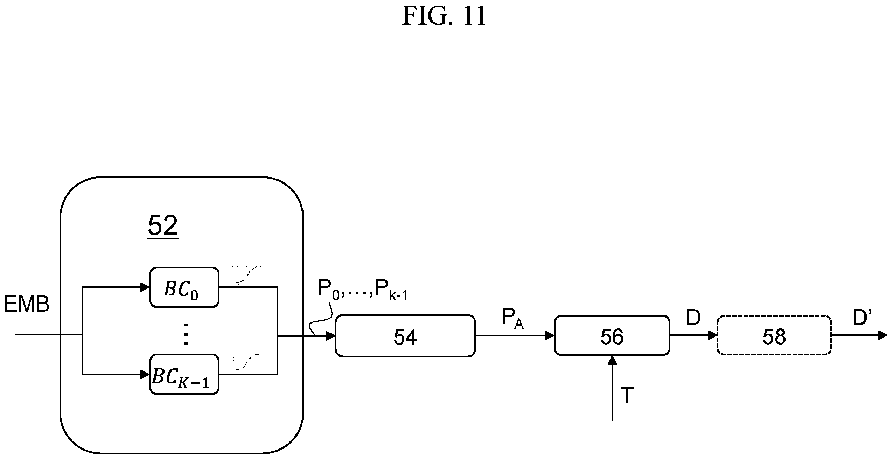

As exemplified herein, a computer program product comprises instructions which, when the program is executed by a computer, cause the computer to carry out the method exemplified in any of Figures 4 to 10.
As exemplified herein, a computer-readable medium 18 has stored therein the set of weight values W and the threshold value T obtained using the method exemplified in any one of Figures 4 to 10.
As exemplified in Figure 11, applying the third ANN processing 50 at inference time on-board the processing device 14 comprises:

- block 52: loading the set of binary classifiers BC0, ..., BCK-1 trained using the method 40 exemplified in Figure 4 and processing the inference embeddings EMB using the set of trained binary classifiers BCo, ..., $BC_{K-1}$ to produce a set of inference probability values $P_0$, ..., $P_{K-1}$;
- block 54: aggregating the inference probability values in the set of inference probability values $P_0$, ..., $P_{K-1}$ in the same way in which they were aggregated during training (block 482 of Figure 8), for instance using the maximum or the sum of the values, obtaining an aggregated probability value $P_A$,
- block 56: loading the stored threshold value T from the memory circuit block 18 and comparing the aggregated probability value $P_A$ with the loaded threshold value T, producing the indicator D having a first logic value as a result of the aggregated probability value $P_A$ exceeding the loaded threshold T and a second logic value as a result of the aggregated probability value $P_A$ failing to exceed the loaded threshold value T;

block 58: optionally, applying post-processing to the indicator signal D, obtaining a post-processed indicator signal D', for instance by averaging a chosen number D consecutive estimates.
As exemplified herein, the training method 40 and the processing device 14 are devised for cross-domain applications, e.g. imaging, audio, inertial domains.
As exemplified in Figures 3 and 11, a method 50 of operating a processing device 14 configured to apply artificial neural network, ANN processing to a set of sensed signals SD, comprises:

applying a first artificial neural network, ANN processing 20 to the set of sensing signals, producing as a result a set of compressed representations of the sensing signals EMB, wherein the first ANN processing is trained to produce the set of compressed representations EMB using a set of training signals IND_TR distributed according to a set of training classes $C_0$, $C_1$, ..., $C_{L-1}$ having an integer number L of classes;
accessing 18 the set of weight values W and the threshold value T obtained using the method exemplified in any one of Figures 4 to 10;

configuring BC weight values of a plurality of computing units of a set of ANN processing circuits BCo, ..., $BC_K$ as a function of the accessed set of weight values;

applying a further artificial neural network, ANN processing to the set of sensed signals via said set of ANN processing circuits configured as a function of said accessed set of weight values, obtaining as a result a set of probability values $P_0,...,P_{K-1}$ indicative of a probability that a respective compressed representation in the set of compressed representations of sensing signals EMB is the compressed representation of a corresponding sensing signal in the set of sensing signals that fails to classify as belonging to the set of training classes having the integer number L of classes;

aggregating 54 the set of probability values produced by the set of ANN processing circuits, obtaining an aggregated probability value $P_A$ as a result;

performing a comparison 56; 483 of the aggregated probability value and the threshold value determined according to any of the previous claims, providing an indicator signal D; D' as a function of the result of the comparison 56; 483, and providing 56; 58 the indicator signal to user circuits 30.

As exemplified herein, a computer program product comprises instructions which, when the program is executed by a computer, cause the computer to carry out the method exemplified in Figures 3 and 11.

As exemplified herein, a computer-readable medium comprises instructions which, when executed by a computer, cause the computer to carry out the method exemplified in Figures 3 and 11.

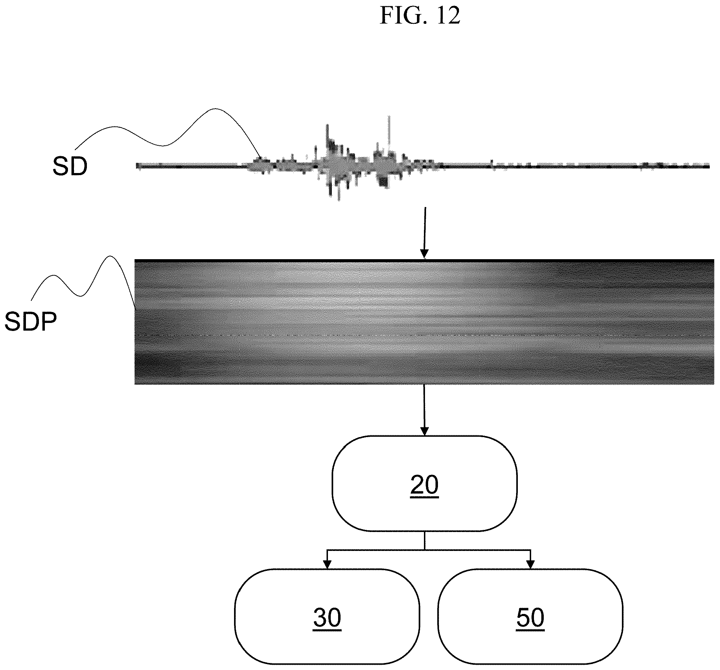

Figure 12 is exemplary of an application of the method and device 40, 50, 14 to the domain of audio signal processing.

In the audio setting experiment, the input data is sensed by an audio sensor and stored in a database DB currently referred to with the name of ESC-50 dataset and retrievable on the GitHub repository: ESC-50 Dataset GitHub - karolpiczak/ESC-50: ESC-50: Dataset for Environmental Sound Classification. Such a set of training signals SD comprises raw wave files (such as the one exemplified as SD in Figure 12) from fifty classes divided into five macro categories, each comprising ten classes.

The macro categories are:

- sounds of animals,
- natural soundscapes,
- human non speech sounds,
- interior sounds and external sounds.

Table I reprocued below exemplifies a possible use case selection for the experimental scenario exemplified herein.

Table I: set of applicative scenarios

| Dataset | No. IND classes | K | TPR | TNR | $\Theta[°]$ |
|---|---|---|---|---|---|
| Alert sounds | 4 | 3 | **94.4%** (99.2%) (92.9%) | **94.4%** (69.8%) (90.2%) | **171.4°** (N.A.) (23.4°) |
| Home sounds | 10 | 5 | **90.7%** (83.9%) (74.9%) | **90.8%** (61.9%) (75.4%) | **162.4°** (N.A.) (36.5°) |
| Animals and human non-speech sounds | 20 | 6 | **92.3%** (52.8%) (66%) | **92.3%** (78.5%) (65.9%) | **159.7°** (N.A.) (78.4°) |

For instance:

- alert souns may comprise baby crying, door knock, clock alarm, glass breaking;
- home sounds may comprise baby crying, clock tick, coughing, dog, glass breaking, laughing, vacuum cleaner, washing machine;
- animals and human non-speech sounds: dog, rooster, pig, cow, frog, cat, hen, insects, sheep, crow, baby crying, sneezing, clapping, breathing, coughing, footsteps, laughing, brushing teeth, snoring, drinking.

As exemplified in Figure 12, the signals were pre-processed by data augmentation techniques to improve the robustness of the downstream classifier (e.g., for instance, variable signal time-stretching signal reverberation combined with a smart trimming process of the original audio sequence, in order to obtain multiple audio segments each one 1 second length suitable for transfer learning) and a conversion of the signals into spectrograms SDP treated as single channel images by the first ANN processing circuit 20. For instance, the YAMNet neural network known from document "Transfer learning with YAMNet for environmental sound classification" available online at the website Tensorflow (tutorial section) may be suitable for use as the embedding generator 20 in one or more embodiments.

For instance, audio samples are sampled at a frequency about 16 kHz in mono.

For instance, the respective spectrograms SDP are computed using magnitudes of the short-time fourier transform (briefly, STFT) with a window size of 25 ms (400 samples) and a window hop length of 10 ms (160 samples).

A set of 64 Mel energies is computed by mapping the spectrogram to Mel scale (in a manner per se known), covering a range of frequencies about 125-7500 Hz. For isntance, these features are then framed into 50% overlapping windows of 960 ms, leading to a 96x64 input to the YAMNet Feature Encoder Net 20.

YAMNet is a complex pre-trained network capable to classify a taxonomy of 521 audio classes; this model is too large to fit into an edge device and dedicated microcontroller. In order to reduce its footprint, 8 bit quantization is applied, reducing the network at the depth in which embeddings with a size about 256 can be extracted. For instance, this embedding size facilitates efficient classification and lightweight OOD detection.

For instance, the 256-embeddings are used as input for a transfer learning based classifier 30 that learns to map the embeddings into four, ten or twenty classes respectively, depending on the use case; whereas OOD detection is performed by the pool of small binary classifiers 50 with the topology loaded from the memory of the processing device 14.

Table II reproduced in the following shows the system benchmarked in the acoustic event detection use case with the classes, on a microcontroller unit at 480MHz; in this case K=3 cluster groups are generated.

A processing device known as STM32Cube.AI can be used to perform benchmarking of the method.

As appreciable, e.g., from Table II below, most of the computational resources are occupied by the complex YAMNet embedding generator 20, followed by the acoustic event detector transfer learning classifier 30, while the third ANN processing stage 50 and its pool of binary classifiers BC require a reduced number of resources.

Table II: Benchmarking of the audio signal processing

| Inference Engine | Input size | Weights | NVM (KB) | RAM (KB) | MACC | Inference Time (ms) |
|---|---|---|---|---|---|---|
| YAMNet 256 int8 | 96x64 | 134.720 | 136.62 | 124.88 | ≈24M | 77.5 |
| AED (TL) | 256x1 | 2.570 | 10.04 | 1.08 | 2.570 | 0.031 |
| OOD (fp32) x 3 | 256x1 | 3.873 (1.291x3) | 15.12 (5.04x3) | 1.03 | 3.918 (1.306x3) | 0.048 (0.016x3) |
| | Total | | 161.78 | 126.99 | ≈24M | 77.579 |

Table III and IV below show list a set of repositories for training signals in the context of image processing.

Table III: datasets used in the image processing domain

| Dataset name | Description | Image Type | No. of Classes |
|---|---|---|---|
| *MNIST* | Handwritten digits | Greyscale 28x28 | 10 |
| *FMNIST* | Fashion clothes images | Greyscale 28x28 | 10 |
| *CIFAR-10* | Natural Images | RGB | 10 |
| *CIFAR-100* | Natural Images | RGB | 100 |
| *FOOD-18* | Natural Images (Food only) | RGB | 18 |
| *iFOOD-2019* | Natural Images (Food only) | RGB | 251 |

For instance, datasets MNIST, FMNIST, CIFAR-10 and CIFAR-100 can be used as benchmark for comparing the performance of different ANN circuits.

For instance:

- FOOD-18 is a used by ST Function (Food-18 is a subset of FD-101 food images dataset, also publicly available) Pack FP-AI-VISION1, which is an STM32Cube function pack featuring examples of computer vision applications based on a Convolutional Neural Network (CNN), comprising 18 classes of food images;
- iFood-2019, available on GitHub repository, is used as OOD dataset and comprises 251 classes, some of which have been removed to avoid collisions with Food-18 classes used as IND signals.

The MNIST classifier is based on a convolutional neural network and its embeddings at the penultimate layer are 100-dimensional vectors.

CIFAR-10 classifier comprises a ResNet32 network with 64-dimensional embeddings. In the Food recognition use case, embeddings are 256-dimensional.

Table IV: comparison of results of image processing

| Dataset | No. IND classes | K | TPR | TNR | $\Theta$ [°] |
|---|---|---|---|---|---|
| *MNIST* *vs* *FMNIST* | 10 | 5 | **99.5%** (98.9%) (97.7%) | **99.5%** (43.4%) (67.7%) | **177.1°** (N.A.) (4.3°) |
| *FMNIST* *vs* *MNIST* | 10 | 5 | **99.4%** (95.6%) (90.7%) | **99.4%** (20.2%) (37.2%) | **178.7°** (N.A.) (3.5°) |
| *CIFAR-10* *vs* *CIFAR-100* | 10 | 4 | **81.9%** (91.3%) (83.7%) | **81.8%** (41.7%) (67.4%) | **128.9°** (N.A.) (4.3°) |
| *FOOD-18* *vs* *iFOOD-2019* | 18 | 6 | **77.8%** (58.3%) (69.9%) | **76.5%** (83.4%) (70.6%) | **68.4°** (N.A.) (85.1°) |

Table IV above summarizes results obtained in applying the (training) method as per the present disclosure to the <IND vs OOD> datasets arrangement obtained from the datasets listed in table III.

Inventors have observed that CIFAR-10, CIFAR-100, and the food datasets contain natural images, which makes them more complex and heterogeneous when compared to MNIST and FMNIST; this is reflected in the lower true positive rate (TPR) and true negative rate (TNR) values obtained for these use cases.

As appreciable from the Tables I to IV above, the proposed method can be deemed to outperform the baseline.

A cross-domain system and method for OOD detection suitable for implementation on edge devices as exemplified herein advantageously preserves the accuracy of the original ANN network. The method can be further applied in specific contexts, such as industrial settings in controlled environments, with additional constraints to the OOD space.

It will be otherwise understood that the various individual implementing options exemplified throughout the figures accompanying this description are not necessarily intended to be adopted in the same combinations exemplified in the figures. One or more embodiments may thus adopt these (otherwise non-mandatory) options individually and/or in different combinations with respect to the combination exemplified in the accompanying figures.

Without prejudice to the underlying principles, the details and embodiments may vary, even significantly, with respect to what has been described by way of example only, without departing from the extent of protection. The extent of protection is defined by the annexed claims.

**Claims**

1. A computer-implemented method (40), comprising:

receiving (DB) a set of sensed training signals (IND_TR, OOD_TR) comprising sensed in-distribution, IND training signals (IND_TR) distributed according to a set of training classes ($C_0$, $C_1$, ..., $C_{L-1}$) having an integer number L of classes and sensed out-of-distribution, OOD training signals (OOD_TR) different from sensed IND training signals (IND_TR);

processing the set of sensed training signals (IND TR, OOD_TR) via an artificial neural network, ANN processing stage (20T), producing a set of compressed representations (EMB_TR) of sensed training signals (IND TR, OOD_TR) as a result, the set of compressed representations (EMB_TR) comprising compressed representations of sensed IND training signals (IND_EMB_TR) and compressed representations of sensed OOD training signals (OOD EMB TR),

wherein the ANN processing stage (20T) is configured to classify sensed IND training signals (IND_TR) distributed according to the set of training classes (Co, $C_1$, ..., $C_{L-1}$) having the integer number L of classes;

clustering (42, 44) the set of compressed representations (EMB_TR) of sensed training signals (IND TR, EMB_TR) according to an integer number K of clusters, obtaining a set of K clusters of compressed representations ($G_0$, ..., $G_{K-1}$) as a result,

wherein the integer number K of clusters is greater than one and less (or equal, at least notionally) than said integer number of classes L;

training (46) a set of K binary classification ANN processing circuits ($BC_0$, ..., $BC_{K-1}$) to output a set of estimated probabilities ($P_0$,...,$P_{K-1}$) that respective compressed representations in the set of K clusters of compressed representations ($G_0$, ..., $G_{K-1}$) classify as compressed representations of sensed OOD training signals (EMB_TR),

wherein training (46) said set of K binary classification ANN processing circuits ($BC_0$, ..., $BC_{K-1}$) comprises iteratively adjusting a set of weight values (W) of a plurality of computing units of the set of K binary classification ANN processing circuits (BCo, ..., $BC_{K-1}$) and obtaining a trained set of K binary classification ANN processing circuits (480) with the set of weight values (W) determined as a result;

providing test signals (IND_TR_test, OOD_TR_test) to the trained set of K binary classification ANN processing circuits (BCo, ..., $BC_{K-1}$) and determining (48; 483, 484, 485, 486, 487, 488, 489) a threshold value (T) for classifying OOD signals based on at least one estimated probability value output by the set of estimated probability values (Po, ..., $P_{K}$-1);

providing said determined set of weight values (W) of the set of K binary classification ANN processing circuits (BCo, ..., $BC_{K-1}$) and the determined threshold value (T) to user circuits (18).

2. The computer-implemented method (40) of claim 1, wherein clustering (44) the sensed training signals in the set of sensed training signals (IND_TR, OOD_TR) comprises:

applying clustering (442, 444) to compressed representations of sensed IND training signals (IND_EMB_TR), obtaining a clustered subset of compressed representations of sensed IND training signals ($G_0^{IND}$, ..., $G^{IND}_{K-1}$) distributed according to the integer number K of cluster groups,

subsampling (441) the compressed representations of sensed OOD training signals (EMB_OOD_TR), and shuffling (443) the subsampled compressed representations of sensed OOD training signals, thereby producing a subset of compressed representations of sensed OOD training signals ($G_0^{OOD}$, ..., $G^{OOD}_{K-1}$), obtaining K subsets of sensed OOD training signals ($G_0^{OOD}$, ..., $G^{OOD}_{K-1}$) distributed according to the integer number K of cluster groups,

- joining (446) the clustered subset of compressed representations of sensed IND training signals ($G_0^{IND}$, ..., $G^{IND}_{K-1}$) and the K subsets of compressed representations of sensed OOD training signals ($G_0^{OOD}$, ..., $G^{OOD}_{K-1}$), producing the set of clustered training signals ($G_0$, ..., $G_{K-1}$) as a result.

3. The computer-implemented method (40) of claim 1 or claim 2, comprising:

aggregating (48; 482) the set of probability values ($P_0$,...,$P_{K-1}$) produced via processing the test signals (IND_TR_test, OOD_TR_test) via the trained set of K binary classification ANN processing circuits (BCo, ..., $BC_{K-1}$), obtaining an aggregated probability value ($P_A$) as a result, and

iteratively determining (48; 483, 484, 485, 486, 487, 488, 489) the threshold value (T) for classifying OOD signals based on the aggregated probability value ($P_A$) exceeding or failing to exceed the threshold value (T),

preferably wherein aggregating (48; 482) the set of probability values ($P_0$,...,$P_{K-1}$) comprises selecting the maximum probability value ($P_A$) among probability values in the set of probability values ($P_0$,...,$P_{K-1}$).

4. The computer implemented method (40) of any of the previous claims, comprising determining the integer number K of clusters by applying an elbow selection method to a grouping cost coefficient $G_{cost}$ function of K, wherein the grouping cost coefficient $G_{cost}$ comprises a ratio between a monotonically decreasing clustering metric and an integer N-th power of the integer number K.

5. The computer-implemented method (40) of any of the previous claims, comprising:

computing (4420) a set of K centroids ($K\_c$) of compressed representations of sensed IND training signals (IND_EMB_TR) classified in the set of L classes ($C_0$, $C_1$, ..., $C_{L-1}$), preferably by applying K-means processing; associating (4422, 4424, 4428) compressed representations of sensed IND training signals (IND_EMB_TR) to respective K groups having respective K centroids of the computed set of K centroids ($K\_c$) based on a distance or density metric.

6. A computer program product comprising instructions which, when the program is executed by a computer, cause the computer to carry out the method of any of claims 1 to 5.

7. A computer-readable medium (18) having stored therein the set of weight values (W) and the threshold value (T) obtained using the method of any of claims 1 to 5.

8. A method (50) of operating a processing device (14) configured to apply artificial neural network, ANN processing to a set of sensed signals (SD), wherein the method (50) comprises:

applying a first artificial neural network, ANN processing (20) to the set of sensing signals (SD), producing as a result a set of compressed representations of the sensing signals (EMB), wherein the first ANN processing (20) is trained (20T) to produce the set of compressed representations (EMB) using a set of training signals (IND_TR) distributed according to a set of training classes (Co, $C_1$, ..., $C_{L-1}$) having an integer number L of classes;
accessing (18) the set of weight values (W) and the threshold value (T) obtained using the method of any of claims 1 to 5;
configuring (BC) weight values of a plurality of computing units of a set of ANN processing circuits (BCo, ..., $BC_{K-1}$) as a function of the accessed set of weight values (W);
applying a further artificial neural network, ANN processing (50) to the set of sensed signals (SD) via said set of ANN processing circuits (BCo, ..., $BC_{K-1}$) configured as a function of said accessed set of weight values (W), obtaining as a result a set of probability values ($P_0$,...,$P_{K-1}$) indicative of a probability that a respective compressed representation in the set of compressed representations of sensing signals (EMB) is the compressed representation of a corresponding sensing signal in the set of sensing signals (SD) that fails to classify as belonging to the set of training classes (Co, $C_1$, ..., $C_{L-1}$) having the integer number L of classes;
aggregating (54) the set of probability values ($P_0$,...,$P_{K-1}$) produced by the set of ANN processing circuits (BCo, ..., $BC_{K-1}$), obtaining an aggregated probability value ($P_A$) as a result;
performing a comparison (56; 483) of the aggregated probability value ($P_A$) and the threshold value (T) determined according to any of the previous claims, providing an indicator signal (D; D') as a function of the result of the comparison (56; 483), and
providing (56; 58) the indicator signal (D; D') to user circuits (30).

9. A computer program product comprising instructions which, when the program is executed by a computer, cause the computer to carry out the method of claim 8.

10. A computer-readable medium comprising instructions which, when executed by a computer, cause the computer to carry out the method of claim 8.

11. A processing device (14) comprising memory circuitry (18) having stored therein:

a set of weight values (W) and a threshold value (T) obtained using the method of any of claims 1 to 6;
instructions which, when executed in the processing device (14), cause the processing device (14) to:

apply a first artificial neural network, ANN processing (20) to a set of sensing signals (SD), producing as a result a set of compressed representations of the sensing signals (EMB), wherein the first ANN processing (20) is trained (20T) to produce the set of compressed representations signals (EMB) using a set of training signals (IND_TR) distributed according to a set of training classes (Co, $C_1$, ..., $C_{L-1}$) having an integer number L of classes;
access (18) the set of weight values (W) and the threshold value (T) stored in said memory circuitry (18) of the processing device (14);

configure (BC) weight values of a plurality of computing units of a set of ANN processing circuits (BCo, ..., $BC_{K-1}$) as a function of the accessed set of weight values (W);

apply a further artificial neural network, ANN processing (50) to the set of sensed signals (SD) via said set of ANN processing circuits ($BC_o$, ..., $BC_{K-1}$) configured as a function of said accessed set of weight values (W), obtaining as a result a set of probability values ($P_0$,...,$P_{K-1}$) indicative of a probability that a respective compressed representation in the set of compressed representations of sensing signals (EMB) is the compressed representation of a corresponding sensing signal in the set of sensing signals (SD) that fails to classify as belonging to the set of training classes ($C_o$, $C_1$, ..., $C_{L-1}$) having the integer number L of classes, and aggregate (54) the set of probability values ($P_0$,...,$P_{K-1}$) produced by the set of ANN processing circuits ($BC0$, ..., $BC_{K-1}$), obtaining an aggregated probability value ($P_A$) as a result; perform a comparison (56; 483) of the aggregated probability value ($P_A$) and the threshold value (T), providing an indicator signal (D; D') as a function of the result of the comparison (56; 483), and provide (56; 58) the indicator signal (D; D') to user circuits (30).

12. A system (10), comprising:

a set of sensors (12) configured to sense a set of sensing signals (SD), and the processing device (14) of claim 11 coupled to the set of sensors (12) to receive therefrom the set of sensing signals (SD), a user circuit (30) coupled to the processing device (14) to receive the indicator signal (D) therefrom, the user circuit (30) configured to be activated or deactivated to process the sensing signals in the set of sensing signals (SD) based on the indicator signal (D) exceeding or failing to exceed said threshold value (T), preferably wherein the set of sensors (12) comprises at least one of:

- an audio sensor (124) configured to sense audio sensing signals,
- a camera (122) configured to sense image signals,
- a triaxial accelerometer (120) configured to provide acceleration signals.

FIG. 1

FIG. 2

FIG. 3

EP 4 418 167 A1

# FIG. 4

EP 4 418 167 A1

FIG. 5

EP 4 418 167 A1

FIG. 6

IND_EMB_TR

$|C_0|, \ldots, |C_{L-1}|$

OOD_EMB_TR

<u>440</u>

<u>441</u>

$C_0, C_1, \ldots, C_{L-1}$

<u>443</u>

$K \leq L$

<u>442</u>

$G_0^{OOD}, \ldots, G_{K-1}^{OOD}$

$\widehat{G_0^{IND}}, \ldots, \widehat{G_{K-1}^{IND}}$

$|G_i^{OOD}| = |G_i^{IND}|$

<u>444</u>

$G_0^{IND}, \ldots, G_{K-1}^{IND}$

<u>44</u>

<u>446</u>

$G_i = G_i^{IND} \cup G_i^{OOD}$

$G_0, \ldots, G_{K-1}$

EP 4 418 167 A1

# FIG. 7

$$K_c$$

$$H_0, \ldots, H_{K-1}$$

$$K \rightarrow \boxed{\underline{4420}} \rightarrow \boxed{\underline{4422}} \rightarrow \boxed{\underline{4424}} \rightarrow \boxed{\underline{4428}}$$

IND_EMB_TR

$$C_0, C_1, \ldots, C_{L-1}$$

$$G_0^{IND}, \ldots, G_{K-1}^{IND}$$

<u>442</u>

# FIG. 7A

$$G_i^{IND}$$

$$H_i$$

K

FIG. 7B

FIG. 8

48

# FIG. 9

$BC_0$  $BC_1$  $BC_2$  $BC_3$  $BC_4$

| | $P_1$ | | | |
| | | $P_2$ | | |
| | $P_1$ | | | |

462

# FIG. 10

EP 4 418 167 A1

FIG. 11

FIG. 12

SD

SDP

EP 4 418 167 A1

**EUROPEAN SEARCH REPORT**

Europäisches Patentamt
European Patent Office
Office européen des brevets

Application Number

**EP 24 15 4082**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RYNE ROADY ET AL: "Are Out-of-Distribution Detection Methods Effective on Large-Scale Datasets?", ARXIV.ORG, CORNELL UNIVERSITY LIBRARY, 201 OLIN LIBRARY CORNELL UNIVERSITY ITHACA, NY 14853, 30 October 2019 (2019-10-30), XP081523351, * pages 1-3,10 * | 1-12 | INV. G06N3/09 G06N3/045 |
| A | CHARLES CORBI\`ERE: "Robust Deep Learning for Autonomous Driving", ARXIV.ORG, CORNELL UNIVERSITY LIBRARY, 201 OLIN LIBRARY CORNELL UNIVERSITY ITHACA, NY 14853, 14 November 2022 (2022-11-14), XP091368967, * the whole document * | 1-12 | |
| A | ALESSIA BERTUGLI ET AL: "Generalising via Meta-Examples for Continual Learning in the Wild", ARXIV.ORG, CORNELL UNIVERSITY LIBRARY, 201 OLIN LIBRARY CORNELL UNIVERSITY ITHACA, NY 14853, 28 January 2021 (2021-01-28), XP081869723, * the whole document * | 1-12 | TECHNICAL FIELDS SEARCHED (IPC) G06N |
| A | HARIKRISHNA NARASIMHAN ET AL: "Learning to reject meets OOD detection: Are all abstentions created equal?", ARXIV.ORG, CORNELL UNIVERSITY LIBRARY, 201 OLIN LIBRARY CORNELL UNIVERSITY ITHACA, NY 14853, 29 January 2023 (2023-01-29), XP091425365, * the whole document * | 1-12 | |

-/--

The present search report has been drawn up for all claims

| Place of search | Date of completion of the search | Examiner |
|---|---|---|
| The Hague | 8 February 2024 | Manfrin, Max |

EPO FORM 1503 03.82 (P04C01)

page 1 of 2

Europäisches
Patentamt
European
Patent Office
Office européen
des brevets

# EUROPEAN SEARCH REPORT

Application Number

EP 24 15 4082

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHIYU LIANG ET AL: "Enhancing The Reliability of Out-of-distribution Image Detection in Neural Networks", ARXIV.ORG, CORNELL UNIVERSITY LIBRARY, 201 OLIN LIBRARY CORNELL UNIVERSITY ITHACA, NY 14853, 30 August 2020 (2020-08-30), XP081750117, * the whole document * | 1-12 | |

TECHNICAL FIELDS
SEARCHED      (IPC)

The present search report has been drawn up for all claims

| Place of search | Date of completion of the search | Examiner |
|---|---|---|
| The Hague | 8 February 2024 | Manfrin, Max |

EPO FORM 1503 03.82 (P04C01)

page 2 of 2